# EUROPÄISCHE PATENTSCHRIFT

(11) **EP 0 659 662 B1**
(45) Veröffentlichungstag und Bekanntmachung des Hinweises auf die Patenterteilung: **23.09.1998**
(21) Anmeldenummer: 94120039.6
(22) Anmeldetag: 17.12.1994
(51) Int. Cl.: B65G 37/00, F16G 13/06

(54) **Stückgut-Greifkette**
Article capturing chain
Chaîne pour saisir des objets

(30) Priorität: 21.12.1993 DE 4343674
(43) Veröffentlichungstag der Anmeldung: 28.06.1995
(73) Patentinhaber: REXNORD KETTE GmbH & Co. KG, D-57518 Betzdorf (DE)
(72) Erfinder: Bald, Alfred, 57080 Siegen (DE); Frenker-Hackfort, Ludger, 57548 Kirchen (DE); Kluge, Erhard, 57290 Neunkirchen (DE)
(74) Vertreter: König, Reimar, Dr.-Ing.

(56) Entgegenhaltungen:
- CH-A- 542 766
- DE-A- 4 204 884
- FR-A- 2 625 984
- PRODUCT ENGINEERING, Nr.20, März 1949, MORGAN-GRAMPIAN PUBLISHING CORP. NEW-YORK Seiten 116 - 117 'TYPES OF BUSHED ROLLER CHAINS AND THEIR ADAPTATIONS'

## Beschreibung

Die Erfindung betrifft eine Gripperkette zum Transportieren von Behältern wie Flaschen, Gläser oder Dosen, beispielsweise in Reinigungs- und Abfüllanlagen. Derartige Gripperketten sind beispielsweise in der deutschen Offenlegungsschrift 42 04 884 und der Schweizer Patentschrift 542 766 beschrieben.

Gripperketten bestehen im wesentlichen aus einer Basiskette, an deren Kettengliedern sich Plattenelemente zum Tragen und Führen des Transportgutes befinden. An den Plattenelementen können Gummielemente zum schonenden Erfassen des Transportgutes sowie zur Verringerung der Lärmbelästigung angeordnet sein. Infolge eines gelenkigen Aneinanderreihens der Kettenglieder ist eine Kurvenführung der Ketten möglich. Um ein Wenden des Transportgutes, beispielsweise während des Reinigens und des Trocknens zu ermöglichen, sind jeweils zwei Ketten im wesentlichen parallel zueinander geführt und klemmen beim V-förmigen Zusammenlaufen das Transportgut ein.

Die Plattenelemente werden durch Aufdrücken mit der Kette verbunden. Ein derartiges Plattenelement besteht aus einer Stützplatte, die über eine Führungsplatte mit einem U-förmigen Bügel verbunden ist. Der Bügel weist Schenkel auf, die in Verbindung mit der parallelen Führungsplatte Gleitschienen übergreifen. Der U-förmige Bügel ist jeweils über einen Kettenbolzen gesetzt und an diesen befestigt. Das Plattenelement wird auf ein Kettenelement, bestehend aus Rolle, Verbindungsglied und Bolzen, aufgeklemmt. Der Nachteil derartiger Plattenelemente besteht darin, daß diese in aufwendiger Weise aus einer Vielzahl von Bauteilen hergestellt werden müssen. Darüber hinaus gibt es lediglich eine einzige und relativ lose Klemm-Verbindung zwischen dem Plattenelement und der Rollenkette, die mit der Gefahr eines Lösens oder Verschiebens verbunden sind.

Trotz der Verwendung von nichtrostender Stähle tritt zwischen den einzelnen Teilen des Plattenelements Spaltkorrosion durch chlorhaltiges Wasser und Fruchtsäurereste auf. Außerdem sind die Platten herstellungsbedingt gefährdet durch Spannungsrißkorrosion, weil es beim Nieten zu inneren Spannungen kommt, und durch Kontaktkorrosion.

Hiervon ausgehend liegt der Erfindung das Problem zugrunde, eine Rollenkette in einfacher Weise und sicher mit Plattenelementen auszustatten sowie den Herstellungsaufwand zu verringern und die Korrosionsgefahr zu beseitigen.

Die Lösung des Problems besteht in einer Rollenkette mit U-förmigen Außenlaschen, die Halterungen für Tragelemente besitzen und zum horizontalen wie vertikalen Führen der Kette durch Kurven dienen. Dazu greifen aus Kunststoff bestehende Schienen in die U-Profile ein; diese Schienen sind so verlegt, daß beispielsweise Flaschen während des Transports um 180° gedreht werden. Dabei erstreckt sich die Drehachse quer zur Flaschenlängsachse. Die Kette besteht aus bei Rollenketten üblichen Rollen und Innenlaschen und den U-förmigen Außenlaschen, die mit Hilfe üblicher Kettenbolzen so zusammengefügt werden, daß sich die Außenlaschen regelmäßig gegenüberliegend beiderseits der Rollen befinden; sie sind in die Kette integriert und ersetzen so praktisch die Außenlaschen herkömmlicher Rollenketten.

Die Außenlaschen bestehen aus einem Mittelteil in Form der bei Rollenketten üblichen Laschen, die mit Bohrungen für die Kettenbolzen versehen sind. Das Mittelteil geht in parallele, abgekantete, vorzugsweise verschieden lange Schenkel über. Die auf diese Weise aus einem einzigen Bauteil bestehende Außenlasche läßt sich mittels üblicher Kettenbolzen mit den übrigen Kettengliedern durch Preßsitz bleibend verbinden.

Auf dem langen Schenkel der Außenlasche ist als Halterung für vorzugsweise als Gummielemente ausgebildete Tragelemente ein Stift angeordnet, der beispielsweise mittig mit dem Schenkel verschweißt sein kann; er ist vorzugsweise aus demselben Werkstoff wie die Außenlaschen.

Die Außenlaschen sind beiderseits der Rollenkette regelmäßig und einander gegenüberliegend so mit der Rollenkette verbunden, daß sich die langen Schenkel der Außenlaschen mit dem Stift auf einer Seite der Rollenkette befinden, und die auf den Stiften befindlichen Gummielemente je zwei Stifte verbinden. Jedes Gummielement verbindet somit den langen Schenkel einer Außenlasche auf der einen Seite der Rollenkette mit dem auf der anderen Seite der Kette gegenüberliegenden langen Schenkel.

Die U-förmigen Außenlaschen bestehen wie alle anderen metallischen Kettenteile vorzugsweise aus rostfreiem Stahl.

Je zwei der erfindungsgemäßen Ketten laufen üblicherweise in einer Ebene V-förmig zusammen und klemmen dabei das Transportgut zwischen je zwei Gummielementen ein.

Die Erfindung wird nachstehend anhand eines in der Zeichnung dargestellten Ausführungsbeispiels des näheren erläutert. In der Zeichnung zeigen:

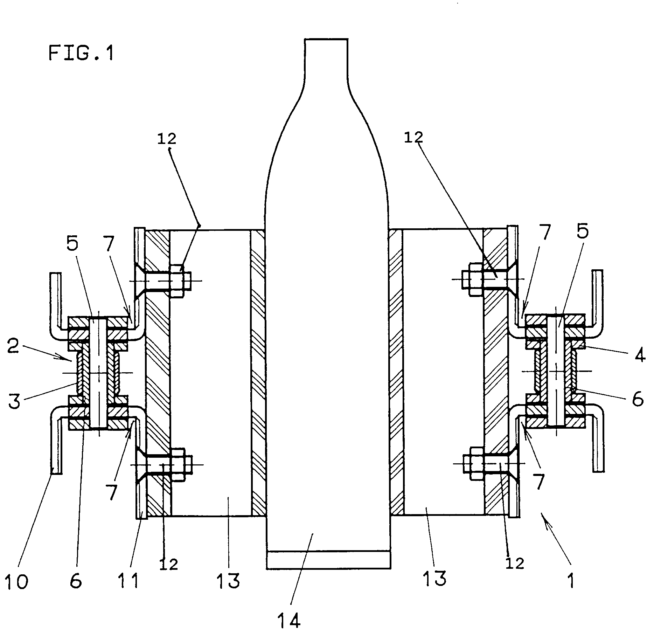

- Fig. 1:: eine Ansicht zweier eine Glasflasche führender Ketten im Schnitt,

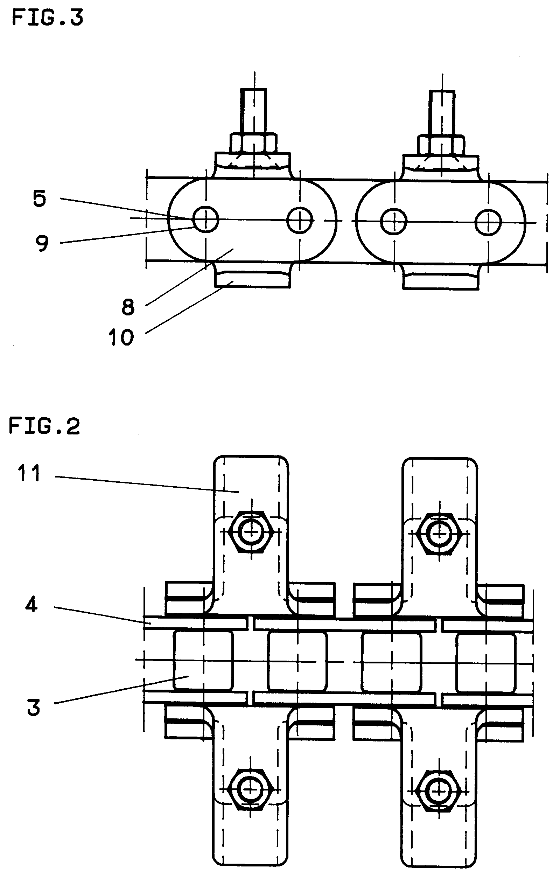

- Fig. 2:: die Ansicht der Kette von unten nach Fig. 1 und
- Fig. 3:: eine Seitenansicht der Kette nach Fig. 1.

Die Gripperkette 1 besteht aus einer Rollenkette 2 mit drehbaren Rollen 3 und Innenlaschen 4, die mit Hilfe von Kettenbolzen 5 in Kettenbuchsen 6 miteinander verbunden sind. In Anlage mit den Laschen 4 sind beiderseits der Rollenkette 2 einteilige U-förmige Außenlaschen 7 angeordnet.

Jede U-förmige Außenlasche 7 besteht aus einem Mittelteil 8 in der Form von bei Rollenketten üblichen Laschen mit Bohrungen 9 für die Kettenbolzen 5, an das sich je ein kurzer Schenkel 10 und ein langer Schenkel 11 anschließt. Die Schenkel 10, 11 umgreifen jeweils eine nicht dargestellte Führungsschiene aus Kunststoff. Die Führungsschienen bestimmen die Laufrichtung der Kette und erlauben eine Kettenbewegung durch Kurven bzw. ein Drehen des Transportgutes beispielsweise um 180°.

Die U-förmigen Außenlaschen 7 tragen mittels Schrauben 12 befestigte Gummielemente 13, welche die zu transportierenden Flaschen 14 erfassen und halten. Die Schrauben 12 sind mittig in den langen Schenkeln 11 der Außenlasche 7 angeordnet.

Bei der Montage der Kette 1 werden an den Kettenrollen 3 beiderseits mit Hilfe der Kettenbolzen 5 in den Kettenbuchsen 6 die Innenlaschen 4 und daran die U-förmigen Außenlaschen 7 befestigt. Dabei werden je zwei Außenlaschen 7 einander gegenüberliegend angebracht. Auf diese Weise wechseln jeweils die Innenlaschen und die Außenlaschen einander ab, d.h. die Außenlaschen übernehmen u.a. auch die Funktion jeder zweiten Lasche einer üblichen Rollenkette.

Jede U-förmige Außenlasche 7 wird so montiert, daß sich deren kurzer Schenkel 10 unterhalb und deren langer Schenkel 11 oberhalb der Rollen 3 befindet. Auf die Stifte 12 der einander gegenüberliegenden Schenkel 11 wird ein Gummielement 13 gedrückt und auf diese Weise die einander gegenüberliegenden Verbindungselemente 7 miteinander verbunden.

Die so ausgerüstete Kette zeichnet sich durch eine hohe Stabilität aus und gewährleistet eine feste und stabile Verbindung der U-förmigen Außenlaschen mit den übrigen Kettenelementen. Die U-förmigen Außenlaschen sind einstückig und lassen sich auf einfache Weise herstellen. Eine aufwendige Montage und Lagerhaltung erübrigt sich. Durch die erfindungsgemäße, korrosionsbeständige Konstruktion ohne die vielen Spalte der herkömmlichen Gripperketten wird die bisherige Störanfälligkeit beseitigt. Schließlich ergibt sich durch die feste, wenn auch teilweise gelenkige Verbindung der einzelnen Kettenteile ein besseres Laufverhalten und insbesondere auch eine größere Laufruhe und Sicherheit.

## Patentansprüche

1. Gripperkette aus einer Rollenkette (2), mit beiderseits angeordneten, U-förmigen Außenlaschen (7), aus einem die Form von Kettenlaschen mit Bohrungen für Kettenbolzen aufweisenden Mittelteil (8), parallelen Schenkeln (10,11) und Halterungen (12) für an den Schenkeln (11) auf einer Seite der Rollenkette (2) angeordnete, die Schenkel (11) zweier einander gegenüberliegender U-förmiger Außenlaschen (7) verbindende Tragelemente (13).

2. Gripperketten nach Anspruch 1, dadurch gekennzeichnet, daß die U-förmige Außenlasche (7) aus dem Mittelteil (8) und unterschiedlich langen Schenkeln (10, 11) besteht.

3. Gripperkette nach Anspruch 1 oder 2, dadurch gekennzeichnet, daß auf einem Schenkel (11) jeder Außenlasche (7) mittig eine Halterung (12) angeordnet ist.

4. Gripperkette nach Anspruch 3, dadurch gekennzeichnet, daß die Halterungen (12) als Stifte ausgebildet sind.

5. Gripperkette nach einem der Ansprüche 1 bis 4 dadurch gekennzeichnet, daß die U-förmigen Außenlaschen (7) beiderseits der Rollenkette (2) regelmäßig und einander gegenüberliegend angeordnet sind.

6. Gripperkette nach einem der Ansprüche 1 bis 5, dadurch gekennzeichnet, daß Gummielemente (13) auf die Halterungen (12) gestülpt sind.

7. Gripperkette nach einem der Ansprüche 1 bis 6, dadurch gekennzeichnet, daß alle Kettenteile aus rostfreiem Material bestehen.

## Claims

1. Gripper chain comprising a roller chain (2) having on each side U-shaped outer link plates (7) comprising a middle part (8) exhibiting the form of chain link plates with bores for link pins, parallel arms (10, 11) and holding means (12) for carrier elements (13), said carrier elements being fitted on the arms (11) on one side of the roller chain (2) and connecting the arms (11) of two opposite U-shaped outer link plates (7).

2. Gripper chain according to claim 1, characterised in that the U-shaped outer link plate (7) comprises the middle part (8) and arms (10,11) of different lengths.

3. Gripper chain according to claim 1 or claim 2, characterised in that a holding means (12) is located in the middle of one arm (11) of each outer plate (7).

4. Gripper chain according to claim 3, characterised in that the holding means (12) are in the form of pegs.

5. Gripper chain according to any one of claims 1 to 4, characterised in that the U-shaped outer link plates (7) are arranged on both sides of the roller chain (2), regularly and opposite one another

6. Gripper chain according to any one of claims 1 to 5, characterised in that rubber elements (13) are pushed on to the holding means (12).

7. Gripper chain according to any one of claims 1 to 6, characterised in that all parts of the chain are made of non-rusting material.

## Revendications

1. Chaîne pour saisir des objets composée d'une chaîne à galets (2) comportant des maillons extérieurs (7) en forme de U disposés de chaque côté, d'une partie centrale (8) présentant la forme de maillons et munie de perçages pour des tourillons de chaîne, composée également de branches parallèles (10, 11) et de dispositifs de fixation (12) pour des éléments de support (13) qui sont disposés sur les branches (11) situées d'un côté de la chaîne à galets (2) et qui relient les branches (11) de deux maillons extérieurs en forme de U (7) se faisant face.

2. Chaîne pour saisir des objets selon la revendication 1, caractérisée en ce que le maillon extérieur en forme de U (7) est composé de la partie centrale (8) et de branches (10, 11) de longueur différente.

3. Chaîne pour saisir des objets selon la revendication 1 ou 2, caractérisée en ce qu'au milieu d'une branche (11) de chaque maillon extérieur (7) est disposé un dispositif de fixation (12).

4. Chaîne pour saisir des objets selon la revendication 3, caractérisée en ce que les dispositifs de fixation (12) sont réalisés sous forme de chevilles.

5. Chaîne pour saisir des objets selon l'une des revendications 1 à 4, caractérisée en ce que les maillons extérieurs (7) en forme de U sont disposés à intervalles réguliers de part et d'autre de la chaîne à galets (2) et face à face.

6. Chaîne pour saisir des objets selon l'une des revendications 1 à 5, caractérisée en ce que des éléments en caoutchouc (13) recouvrent les dispositifs de fixation (12).

7. Chaîne pour saisir des objets selon l'une des revendications 1 à 6, caractérisée en ce que tous les éléments qui composent la chaîne sont en un matériau inoxydable.
